# EUROPÄISCHE PATENTSCHRIFT

(11) **EP 0 734 885 B1**
(45) Veröffentlichungstag und Bekanntmachung des Hinweises auf die Patenterteilung: **08.11.2000**
(21) Anmeldenummer: 96104914.5
(22) Anmeldetag: 28.03.1996
(51) Int. Cl.: B44C 1/14, B44C 1/22, B44C 1/17, B41M 1/24

(54) **Verfahren zum Beschichten einer transparenten Trägerplatte sowie danach hergestellte beschichtete Trägerplatte**
Process for coating a transparent support plate and support plate manufactured by said process
Procédé de revêtement d'une plaque support transparente et plaque support ainsi fabriquée

(30) Priorität: 31.03.1995 DE 19512157
(43) Veröffentlichungstag der Anmeldung: 02.10.1996
(73) Patentinhaber: Kall, Klaus, 77656 Offenburg (DE); Kall, Florian, 67000 Strassbourg (FR)
(72) Erfinder: Kall, Klaus, 77656 Offenburg (DE); Kall, Florian, 67000 Strassbourg (FR)
(74) Vertreter: Goddar, Heinz J., Dr.

(56) Entgegenhaltungen:
- EP-A- 0 537 668
- DE-A- 3 317 271
- DE-A- 4 326 314
- DE-C- 3 808 689
- FR-A- 2 690 862
- US-A- 4 987 006
- US-A- 5 173 441

## Beschreibung

Die Erfindung betrifft ein Verfahren zum Beschichten einer transparenten, vorzugsweise aus klarem Acrylglas bestehenden Trägerplatte mit einer Farb- und/oder Metall- Prägefolienbeschichtung, bei dem im Rollenprägeverfahren eine Prägefolie, die eine den gewünschten Farb- und/oder Metalleindruck hervorrufende, auf einer transparenten Trägerfolie angeordnete Wirkschicht und auf der der Trägerfolie abgewandten Seite eine unter den Bedingungen des Rollenprägeverfahrens (Druck und Wärme) aktivierbare Haftschicht aufweist, die flächig auf die Trägerplatte aufgebracht wird, wobei die Wirkschicht über die Haftschicht selektiv ausschließlich in solchen Bereichen, in denen der Farb- oder Metalleindruck erwünscht ist, dauerhaft mit der Trägerplatte verbunden, in den anderen Bereichen jedoch wieder von dieser entfernt wird.

Aus der DE-PS 38 08 689 ist ein Verfahren der vorstehend beschriebenen Art zum selektiven, bereichsweisen Beschichten einer transparenten Trägerplatte mit einer insbesondere metallischen Prägefolienbeschichtung bekannt, bei dem auf die Trägerplatte zunächst im Siebdruckverfahren eine Abdeckfolie aufgebracht wird, welche lediglich die nicht zu beschichtenden Bereiche der Trägerplatte abdeckt und daraufhin im Rollenprägeverfahren die Prägefolie auf die Gesamte die Abdeckfolie tragende Fläche der Trägerplatte aufgebracht wird. Schließlich wird, entweder nach vorherigem Abziehen der Trägerfolie der Prägefolie oder aber unter gleichzeitigem bereichsweisen Entfernen der Trägerfolie, die Abdeckfolie von der Trägerplatte abgezogen, wodurch die Wirkschicht lediglich in denjenigen Bereichen der Trägerplatte über die Haftschicht fest mit der Trägerplatte verbunden bleibt, in denen keine Abdeckfolie vorhanden war, so daß die ursprünglich mit der Abdeckfolie versehenen Bereiche transparent bleiben.

Ähnliche Vorgehensweisen, und zwar ähnlich insofern, als es sich ebenfalls um ein bereichsweises Beschichten einer transparenten Trägerplatte mittels Prägefolienbeschichtung, insbesondere unter Hervorrufung eines Metalleindruckes, handelt, sind in der DE-PS 33 37 128, der DE-OS 41 35 872, der DE-OS 42 24 463 und der DE-OS 43 17 271 beschrieben.

Die vorstehend beschriebenen Verfahren haben sich grundsätzlich bewährt, jedoch hat es sich als wünschenswert herausgestellt, die gewünschte Wirkschicht mit noch geringerem Arbeits- und Materialaufwand selektiv bereichsweise mit der Trägerplatte zu verbinden, wobei insbesondere auch verformte und/oder aus anderen Gründen schwer zugängliche Prägeflächen beschichtbar sein sollen.

Gegenstand eines älteren Vorschlages (DE-OS 43 33 546, nachveröffentlicht) ist es diesbezüglich, das selektive, bereichsweise Verbinden der Wirkschicht mit der Trägerplatte mittels eines Verfahrens der eingangs genannten Art in der Weise durchzuführen, daß entweder die Wirkschicht durch Einwirkung von Laserstrahlung mit der Trägerplatte bereichsweise verbunden oder aber die Wirkschicht in solchen Bereichen, in denen der Farb- und/oder Metalleindruck nicht erwünscht ist, durch von der der Trägerplatte abgewandten Seite der Prägefolie einwirkende Laserstrahlung von der Trägerplatte entfernt wird. Bei der letztgenannten Vorgehensweise wird die Trägerfolie vorzugsweise zunächst von der über die Haftschicht flächig mit der Trägerplatte verbundenen Wirkschicht abgezogen, woraufhin dann der Laser von der Wirkschichtseite aus in den Bereichen, in denen die Wirkschicht zu entfernen ist, auf die Wirkschicht gerichtet wird. Eine Schwierigkeit besteht dabei darin, daß der Laserstrahl zwar von der farbigen und/oder metallischen Wirkschicht gut absorbiert wird, so daß die Wirkschicht als solche verhältnismäßig leicht und sauber von der Trägerplatte entfernt werden kann, daß jedoch, sobald die Wirkschicht von dem Laserstrahl entfernt worden ist, die zwischen der Wirkschicht und der Trägerplatte befindliche Haftschicht nur schwer von dem Laserstrahl verdampft werden kann, weil die Haftschicht aus transparentem Material besteht und die Energie des Laserstrahles nur schlecht absorbiert. Hierdurch kann es leicht zu Unsauberkeiten und Ausfransungen an den Bereichsgrenzen kommen.

Ähnliche Schwierigkeiten treten auch auf, wenn versucht wird, bei einem Verfahren der gattungsgemäßen Art in der aus der DE-PS 41 34 271 bekannten Weise zum bereichsweisen Entfernen der Wirkschicht Laserstrahlung einzusetzen, weil auch bei dem vorgenannten Verfahren die Laserstrahlung von der der Trägerplatte abgewandten Seite der Beschichtung eingesetzt wird, dort zum schichtweisen, selektiven Abtragen einzelner Schichtkomponenten.

Der Erfindung liegt der Aufgabe zugrunde, das Verfahren der gattungsgemäßen Art dahingehend weiterzubilden, daß unter Einsatz von Laserstrahlung einwandfreie, saubere Konturen der mit der Wirkschicht zu versehenden Bereiche gewährleistet werden.

Erfindungsgemäß wird diese Aufgabe in Weiterbildung des gattungsgemäßen Verfahrens dadurch gelöst, daß das bereichsweise Entfernen der Wirkschicht unter gleichzeitigem Entfernen der Haftschicht mittels von der der Prägefolienbeschichtung abgewandten Seite der Trägerplatte einwirkender, letztere durchsetzender Laserbestrahlung durchgeführt wird.

Dabei kann vorgesehen sein, daß die Trägerfolie vor der Laserbestrahlung flächig insgesamt von der Trägerplatte und der mit dieser verbundenen Wirkschicht abgezogen wird.

Hierbei kann auch so vorgegangen werden, daß die Trägerfolie erst nach Durchführung der Laserbestrahlung von der Trägerplatte und der mit dieser bereichsweise verbundenen Wirkschicht abgezogen wird.

Ferner schlägt die Erfindung gegebenenfalls vor, daß für die Laserbestrahlung ein gepulster Laser verwendet wird.

Eine weitere Ausführungsform der Erfindung ist dadurch gekennzeichnet, daß für die Laserbestrahlung ein YAG-Laser verwendet wird.

Das erfindungsgemäße Verfahren kann auch so ausgeführt werden, daß die Laserbestrahlung mittels eines CAD-artig gesteuerten Laserstrahles erfolgt.

Der Erfindung liegt die überraschende Erkenntnis zugrunde, daß es gelingt, die gestellte Aufgabe zu lösen und Prägeflächen mit einer farbigen oder metallisierten Prägefolienbeschichtung mit sauberen Bereichsgrenzen zu versehen, indem das selektive, bereichsweise Entfernen der Wirkschicht der Prägefolie von der Trägerplatte durch Laserbestrahlung erfolgt, welche die Trägerplatte durchsetzend eingesetzt wird. Dadurch, daß die Laserbestrahlung auf die an der der Strahlungseinwirkung abgewandten Seite befindliche Beschichtung aus transparenter Haftschicht und Wirkschicht in den Bereichen, in denen die Wirkschicht entfernt werden soll, in einem Zustand einwirkt, in welchem die Wirkschicht zu Beginn der Laserbestrahlung noch unversehrt ist, wird die gesamte Energie des Laserstrahles von der farbigen und/oder metallischen Wirkschicht absorbiert, wobei eine so hohe Wärmeentwicklung auftritt, daß zuverlässig mit der Wirkschicht auch die zwischen der Wirkschicht und der Trägerplatte befindliche Haftschicht sauber entfernt wird. Dies steht im Gegensatz zu den Problemen, die bei der Beaufschlagung der Wirkschicht von der der Trägerplatte abgewandten Seite mit Laserbestrahlung entstehen, weil dann die Haftschicht noch in einem Zustand abgelöst werden muß, in welchem die Wirkschicht bereits ganz oder teilweise entfernt ist.

Nachstehend ist ein Ausführungsbeispiel der Erfindung anhand der schematischen Zeichnung im einzelnen erläutert.

Dabei zeigt die aus einer einzigen Figur bestehende Zeichnung eine mit einer Prägefolienbeschichtung versehene Trägerplatte vor der erfindungsgemäßen Laserbestrahlung im Schnitt senkrecht zur Trägerplattenebene.

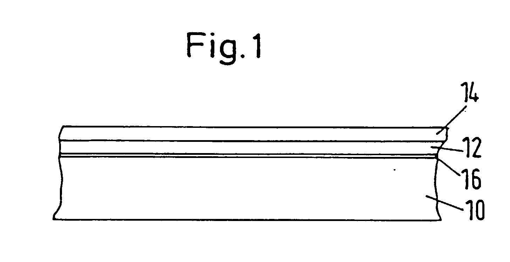

Wie die Zeichnung erkennen läßt, ist dort auf einer Trägerplatte 10 aus klarem Acrylglas eine Prägefolienbeschichtung aufgebracht, und zwar in der Weise, wie dies in der DE-PS 38 08 689 beschrieben ist, auf die zur Ergänzung des Erfindungsgedankens insoweit in vollem Umfang Bezug genommen wird. Die Prägefolie weist eine Goldfolie 12 sowie eine Trägerfolie 14 aus Polyestermaterial auf, wobei die auf die Trägerfolie 14 aufgedampfte Goldfolie 12 eine Wirkschicht darstellt. An der der Trägerfolie 14 abgewandten Seite der Wirkschicht 12 befindet sich eine Haftschicht 16 aus wärmeaktivierbarem Kleber, wobei in dem in Figur 1 gezeigten Zustand bereits in dem vorstehend beschriebenen Rollenprägeverfahren eine feste, flächige Verbindung der Wirkschicht 12 mit der Trägerplatte 10 bewerkstelligt worden ist.

Bei dem erfindungsgemäßen Verfahren wird unter Zugrundelegung der mit der Prägefolienbeschichtung insgesamt flächig versehenen Trägerplatte gemäß der Zeichnung wie folgt vorgegangen:

Die Trägerfolie 14 wird zunächst von der Trägerplatte 10 bzw. der damit über die Haftschicht 16 fest verbundenen Wirkschicht 12 abgezogen. Anschließend wird in denjenigen Bereichen, in denen kein Metallton erwünscht ist, die Wirkschicht 12 zusammen mit der Haftschicht 16 durch Laserbestrahlung, in der Zeichnung von unten kommend, also die Trägerplatte 10 durchsetzend, von der transparenten Trägerplatte 10 entfernt. Anschließend ist also die Trägerplatte 10 nur noch in solchen Bereichen mit der Wirkschicht 12 (über die auch dort natürlich noch vorhandene transparente Haftschicht 16) versehen und hat daher auch dort nur noch einen Metallton, in denen dies aufgrund eines vorgebbaren Musters, entsprechend welchem der Laserstrahl geführt wird, erwünscht ist.

Wichtig ist für das Verfahren nach der Erfindung, daß die Trägerplatte transparent ist, da sich nur unter Ausnutzung dieser besonderen Eigenschaft der Trägerplatte der Erfindungsgedanke verwirklichen läßt, einen Laserstrahl von der der Prägefolienbeschichtung abgewandten Seite der Trägerplatte her einzusetzen, also die transparente Trägerplatte durchsetzend, mit den in diesem Zusammenhang bereits beschriebenen Vorteilen bezüglich des zuverlässigen Ablösens der Haftschicht 16 gemeinsam mit der Wirkschicht 12.

## Patentansprüche

1. Verfahren zum Beschichten einer transparenten, vorzugsweise aus klarem Acrylglas bestehenden Trägerplatte (10) mit einer Farb- und/oder Metall-Prägefolienbeschichtung, bei dem im Rollenprägeverfahren eine Prägefolie (12, 14, 16), die eine den gewünschten Farb- und/oder Metalleindruck hervorrufende, auf einer transparenten Trägerfolie (14) angeordnete Wirkschicht (12) und auf der der Trägerfolie (14) abgewandten Seite eine unter den Bedingungen des Rollenprägeverfahrens aktivierbare Haftschicht (16) aufweist, die flächig auf die Trägerplatte (10) aufgebracht wird, wobei die Wirkschicht (12) über die Haftschicht (16) selektiv ausschließlich in solchen Bereichen, in denen der Farb- und/oder Metalleindruck erwünscht ist, dauerhaft mit der Trägerplatte (10) verbunden, in den anderen Bereichen jedoch wieder von dieser entfernt wird, dadurch gekennzeichnet, daß das bereichsweise Entfernen der Wirkschicht (12) unter gleichzeitigem Entfernen der Haftschicht (16) mittels von der der Prägefolienbeschichtung abgewandten Seite der Trägerplatte (10) einwirkender, letztere durchsetzender Laserbestrahlung durchgeführt wird.

2. Verfahren nach Anspruch 1, dadurch gekennzeichnet, daß die Trägerfolie (14) vor der Laserbestrahlung flächig insgesamt von der Trägerplatte (10) und der mit dieser verbundenen Wirkschicht (12) abgezogen wird.

3. Verfahren nach Anspruch 1, dadurch gekennzeichnet, daß die Trägerfolie (14) erst nach Durchführung der Laserbestrahlung von der Trägerplatte (10) und der mit dieser bereichsweise verbundenen Wirkschicht (12) abgezogen wird.

4. Verfahren nach einem der vorangehenden Ansprüche, dadurch gekennzeichnet, daß für die Laserbestrahlung ein gepulster Laser verwendet wird.

5. Verfahren nach einem der vorangehenden Ansprüche, dadurch gekennzeichnet, daß für die Laserbestrahlung ein YAG-Laser verwendet wird.

6. Verfahren nach einem der vorangehenden Ansprüche, dadurch gekennzeichnet, daß die Laserbestrahlung mittels eines CAD-artig gesteuerten Laserstrahles erfolgt.

## Claims

1. A method of coating a transparent carrier plate (10), preferably made of clear acrylic glass, with a coloured and/or metal embossed sheet, wherein, in a roller-embossing process, an embossed sheet (12, 14, 16) bearing an active layer (12) disposed on a transparent carrier sheet (14) and producing the desired coloured and/or metallic impression, the side remote from the carrier sheet (14) having an adhesive layer (16) which can be activated under the conditions of the roller-embossing process and is applied to the surface of the carrier plate (10), wherein the active layer (12), via the adhesive layer (16), is selectively permanently connected to the carrier plate (10) exclusively in those areas where the coloured and/or metallic impression is desired, whereas it is removed therefrom in the other areas, characterised in that the active layer (12) is removed from certain areas at the same time as the adhesive layer (16) is removed by laser irradiation which acts on and travels through the side of the carrier plate (10) remote from the embossed-sheet coating.

2. A method according to claim 1, characterised in that before laser irradiation, the carrier sheet (14) is pulled off the entire surface of the carrier plate (10) and from the active layer (12) connected thereto.

3. A method according to claim 1, characterised in that only after irradiation with the laser is the carrier sheet (14) pulled off the carrier plate (10) and from the active layer (12) connected to areas thereof.

4. A method according to any of the preceding claims, characterised in that a pulsed laser is used for the laser irradiation.

5. A method according to any of the preceding claims, characterised in that a YAG laser is used for the laser irradiation.

6. A method according to any of the preceding claims, characterised in that the laser irradiation is effected by means of a laser beam controlled by CAD or similar means.

## Revendications

1. Procédé pour le revêtement d'une plaque support (10) transparente, de préférence réalisée en verre acrylique clair, avec un revêtement en feuille gaufrée colorée et/ou métallique, dans lequel on relie par un procédé d'impression par laminage de façon durable en surface à la plaque support (10) une feuille gaufrée (12, 14, 16) qui présente une couche active (12) agencée sur une feuille de support transparente (14) et produisant l'impression colorée et/ou métallique souhaitée, et une couche adhésive (16) sur le côté opposé à la feuille de support (14) susceptible d'être activée sous les conditions du procédé d'impression par laminage, dans lequel la couche active (12) est reliée de façon durable à la plaque support (10) par l'intermédiaire de la couche adhésive (16) de façon sélective et exclusivement dans celles des régions dans desquelles l'impression colorée et/ou métallique est souhaitée, mais à nouveau enlevée de ladite plaque support dans les autres régions, caractérisé en ce que l'enlèvement par régions de la couche active (12) est exécuté avec enlèvement simultané de la couche adhésive (16) au moyen de l'application d'un rayonnement laser agissant depuis le côté de la plaque support (10) opposé au revêtement en feuille gaufrée, et traversant ladite plaque support.

2. Procédé selon la revendication 1, caractérisé en ce que la feuille de support (14) est tirée avant l'application du rayonnement laser en surface au total depuis la plaque support (10) et depuis la couche active (12) reliée à celle-ci.

3. Procédé selon la revendication 1, caractérisé en ce que la feuille de support (14) est tirée depuis la plaque support (10) et depuis la couche active (12) reliée localement à celle-ci, uniquement après exécution de l'application du rayonnement laser.

4. Procédé selon l'une des revendications précédentes, caractérisé en ce que l'on utilise un laser pulsé pour l'application du rayonnement laser.

5. Procédé selon l'une des revendications précédentes, caractérisé en ce que l'on utilise un laser YAG pour l'application du rayonnement laser.

6. Procédé selon l'une des revendications précédentes, caractérisé en ce que l'application du rayonnement laser a lieu au moyen d'un rayonnement laser commandé par ordinateur.
